# EUROPEAN PATENT APPLICATION

(11) **EP 1 176 843 A1**
(43) Date of publication of application: **30.01.2002**
(21) Application number: 01401941.8
(22) Date of filing: 19.07.2001
(51) Int. Cl.: H04Q 7/36

(54) **System and method for selecting a channel in a TDD asymmetric radiocommunication system**

(30) Priority: 25.07.2000 ES 200001862
(71) Applicant: ALCATEL, 75008 Paris (FR)
(72) Inventor: Lablanca Almeida, Francisco Javier, 28045 Madrid (ES); Aguilar Sanchez, Luciano Jesus, 28005 Madrid (ES); Lopez, Almansa, Eugenio, 28019 Madrid (ES)
(74) Representative: Lamoureux, Bernard

(57) **Abstract**

Method for efficiently selecting a channel in a TDD asymmetric radiocommunication system, in which a first remote unit (11) wishes to set up a communication with a first fixed unit (12), and both units explore, independently, the signal level present in each one of the available radio channels.

Once the first fixed unit (12) knows over which available radio channels it is not suitable to set up the communication for it, it broadcasts this to the remote unit (11). Next, the first remote unit (11) must pair one of the radio channels suitable for the first fixed unit (12) with one of those suitable for it.

If the first remote unit (11) finds an available radio channel suitable for the two units, the desired communication is established over the radio channel available and suitable for both units. If it does not manage to find a radio channel available and suitable for both units, then the process is repeated.

## Description

### OBJECT OF THE INVENTION

The present invention relates to a method for selecting a radio channel in an asymmetric radiocommunication system that transmits all types of information independently of its nature (voice, data, images, video, etc.). It is of special application, but not exclusively, in the communication of information asymmetrically.

The method of radio channel selection in asymmetric communications obviates or significantly diminishes interference due to the use of a same radio channel in one transmission direction by a first fixed unit and in the opposite transmission direction by a second fixed unit.

The radiocommunication system implements the communications making use of time division duplex (TDD) techniques in conjunction with techniques such as time division multiple access (TDMA), frequency division multiple access (FDMA), code division multiple access (CDMA), etc.

### STATE OF THE ART

A radiocommunication system has a plurality of fixed units, in such a manner that they employ the same group of radio channels for setting up communications with the remote units located inside their respective coverage areas.

Consequently, a same radio channel can be employed, at the same time, by a first fixed unit in one transmission direction and in the direction opposite to the preceding transmission direction by a second fixed unit.

Thus, interference is produced in the unit that is receiving caused by the unit which is transmitting, which can lead to the dropping of the communication set up and/or prevent the setting up of a communication that it is wished to establish.

It is known from the state of the art that one way to avoid interference is to implement a reservation of radio channels in order that they be allocated preferentially to one type of communication such as asymmetric communications, so that when it is wished to set up a symmetric communication the radio channels reserved for asymmetric communications cannot be allocated thereto.

Hence the radio resources of the radiocommunication system with asymmetric communications are managed inefficiently, this being a drawback since said radio resources are limited and use of the radio resources available within a coverage area until the radio channels allocated to asymmetric communications are released is limited in a temporary manner.

Thus, there is a need to develop a method for selecting a radio channel in an asymmetric radiocommunication system, whereby the possibility of experiencing interference in radio channels that are capable of being allocated in a simultaneous manner to both transmission directions in different units is reduced.

### CHARACTERISATION OF THE INVENTION

To overcome the aforementioned problems, a method for radio channel selection in a TDD asymmetric radiocommunication system is proposed, whereby a first fixed unit broadcasts to a set of remote units located within its coverage area those radio channels which are allocated to established communications.

When a first remote unit wishes to set up a communication with the first fixed unit, both units carry out a process of exploration, during which both units measure the signal level, possible interfering signal, present in each of the available radio channels.

Once the first fixed unit is aware on which available radio channels is not suitable for it to set up a communication, it broadcasts this to the remote units located within its coverage area, in such a manner that the first remote unit that wishes to set up a communication must pair with one of the radio channels suitable for the first fixed unit with one of those suitable for it.

If the first remote unit finds an available radio channel suitable for the two units, the desired communication is finally implemented. If it does not manage to find a radio channel suitable for the two units, then the process is repeated.

Thus within the radiocommunication system one manages to avoid situations in which two very close remote units, which communicate with different fixed units, use the same radio channel one of them using it for transmitting and the other for receiving. Likewise, it is avoided that two fixed units with direct line of sight or located on the same pole use the same radio channel one of them using it for transmitting and the other for receiving.

Consequently, one avoids failed attempts to set up communications and failed attempts at handover, and situations of handover for interference are minimised, as well as breaks in communications, delays and retransmission of information, when the radiocommunication system is handling asymmetric communications.

Therefore, radio channel selection is optimised, greater efficiency in the operation of the radiocommunication system is achieved and the quality of service "QoS" is improved, especially in packet transmission.

### BRIEF DESCRIPTION OF THE DRAWINGS

A more detailed explanation of the invention is provided in the following description, based on the attached drawings, in which:
- figure 1 shows, in a schematic diagram, two remote units, a first receiving and a second transmitting at the same time, belonging to an asymmetric radiocommunication system according to the invention, and
- figure 2 shows, in a schematic diagram, two fixed units, a first receiving and a second transmitting at the same time, belonging to the asymmetric radiocommunication system according to the invention.

### DESCRIPTION OF THE INVENTION

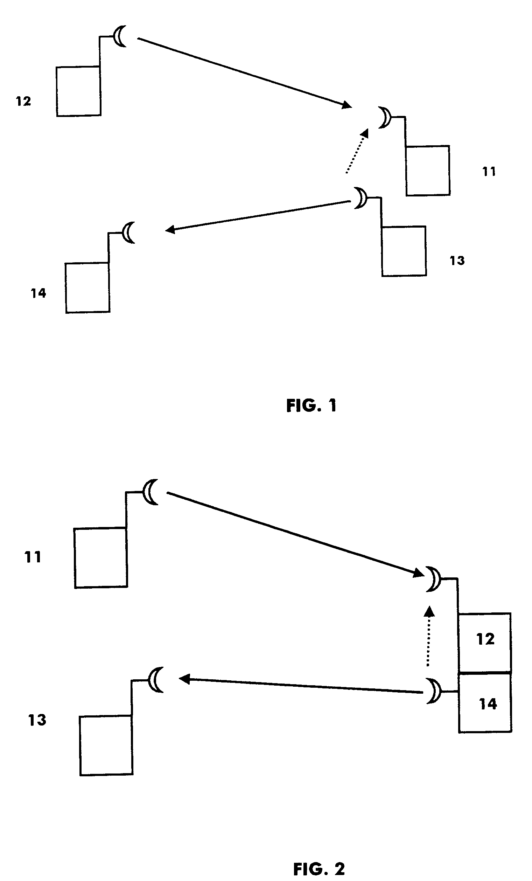

Figure 1 shows a TDD radiocommunication system in which a second remote unit 13 is transmitting to a second fixed unit 14 and a first remote unit 11 wishes to set up a communication with a first fixed unit 12.

As the first fixed unit 12 and the second fixed unit 14 use the same radio channel bank and each radio channel can be employed indistinctly in both transmission directions, the case can arise in which the second remote unit 13 produces interference in the communication that the first remote unit 11 desires to set up, in the event of using the same radio channel in both communications, when the two are close to each other even if located in different coverage areas.

To prevent the interference and according to the invention, when the first remote unit 11 wishes to set up a communication with the first fixed unit 12, an available radio channel selection process is undertaken that includes the following stages:

The first fixed unit 12 broadcasts to the remote units located in its coverage area the radio channels that are allocated to communications in course.

The first remote unit 11 has some first exploration means in order to verify over which available radio channels it receives a signal. Thereafter, the first remote unit 11 carries out an evaluation of the signal received over each available radio channel employing some first measurement means.

That is, the first remote unit 11 evaluates the power it receives over each available radio channel not allocated to any communication in the coverage area of the first fixed unit 12.

Next, some first verification means checks that the power level received in each available radio channel does not exceed a predetermined power threshold. The threshold is set for the purpose of identifying from which power level interference could occur.

In the event that the power level received in an available radio channel is greater than the predetermined power threshold, the first remote unit 11 marks it as not suitable for setting up the desired communication.

In parallel, the first fixed unit 12 carries out a process similar to that performed by the first remote unit 11. Thus, the first fixed unit 12 has some second exploration means to verify on which available radio channels a signal is being received.

Next, the first fixed unit 12 carries out the evaluation of the signal received over each available radio channel by means of some second measurement means.

Then, the first fixed unit 12 also evaluates the power level it receives on each available radio channel. Next, some second verification means checks that the power level received over each available radio channel does not exceed the predetermined power threshold.

In the event that the power level received over an available radio channel is greater than the predetermined power threshold, the first fixed unit 12 marks it as not suitable for setting up the desired communication over it whilst the power level thereon remains above the predetermined power threshold.

Following this, the first fixed unit 12 broadcasts to the remote units, including the first remote unit 11, those available radio channels which, from the point of view of the first fixed unit 12, are suitable for setting up a communication.

Notice that both the first remote unit 11 and the first fixed unit 12 only carry out the power measurement in those available radio channels, as both units know which channels are allocated to communications in course.

Once the first remote unit 11 receives from the first fixed unit 12 the available and suitable radio channels, the first remote unit 11 scans for a radio channel that coincides for both units. That is, by means of some first pairing means it couples one of the radio channels suitable for the first fixed unit 12, with one of those suitable for itself.

If the first remote unit 11 encounters an available radio channel suitable for the two units, it finally sets up the desired communication. If it does not manage to find a radio channel suitable for the two units, then the process is repeated.

Notice that in the event that a third remote unit located within the coverage area of the first fixed unit 12 wishes to set up a communication, this can be done on the radio channel allocated to the communication set up between the second remote unit 13 and the second fixed unit 14, since the power level measured in the third remote unit does not exceed the predetermined power threshold. Therefore, the radio channel that is not suitable for the first remote unit 11 can be suitable for the third remote unit.

With regard to figure 2, this shows the situation in which both the first fixed unit 12 and the second fixed unit 14 are close, for example, they are located on the same pole, and the second fixed unit 14 is transmitting to the second remote unit 13 and between the first fixed unit 12 and the first remote unit 11 it is desired to set up a communication.

The case can arise in which the second fixed unit 14 produces interference in the communication that the first fixed unit 12 desires to set up, in the event that both communications make use of the same radio channel. To prevent the interference, the selection process of the invention is performed in like manner.

As a consequence, the first fixed unit 12 evaluates the power it receives over each available radio channel, and transmits to the first remote unit 11 those available radio channels that, from its point of view, are suitable for setting up a communication.

Thereafter, the first remote unit 11 hunts for a radio channel that coincides for both units, and by means of some second pairing means it couples one of the radio channels suitable for the first remote unit 11 with one of those suitable for itself.

If the first remote unit 11 encounters an available radio channel suitable for the two units, the desired communication is finally implemented. If it does not manage to find a radio channel suitable for the two units, then the process is repeated.

## Claims

1. **Method for efficiently selecting a channel in a TDD asymmetric radiocommunication system,** in which a second remote unit (13) is transmitting to a second fixed unit (14) over a radio channel, and a first remote unit (11) wishes to set up a communication with a first fixed unit (12), **characterised in that** the method comprises the following steps:
a) determining over which available radio channels a signal is being received,
b) measuring the signal level received over said available radio channels,
c) if the signal level measured in step b) is less than a predetermined power threshold, said available radio channel is proposed for setting up said desired communication, and
d) if said signal level measured in step b) is greater than said predetermined power threshold, said available radio channel is discarded for setting up on said desired communication.

2. **Method for selecting** according to claim 1, **characterised in that** it is repeated from step a) to step d) in order to determine an available radio channel suitable both for said remote unit (11) and for said fixed unit (12) for the purpose of setting up over it said desired communication.

3. **System for efficiently selecting a channel in a TDD asymmetric radiocommunication system,** in which a second remote unit (13) is transmitting to a second fixed unit (14) over a radio channel, and a first remote unit (11) wishes to set up a communication with a first fixed unit (12), **characterised in that** the system includes means for determining over which available radio channels a signal is received, means for measuring signal level received over said available radio channels, means for determining whether the signal level measured is less than a predetermined power threshold and means for declaring said available radio channel suitable for setting up thereover said desired communication.

4. **System for selecting** according to claim 3, **characterised in that** it also includes means for scanning for an available radio channel suitable for both said remote unit (11) and for said fixed unit (12) for the purpose of setting up thereover said desired communication.

5. **Remote unit** according to claim 3, **characterised in that** it includes some first exploration means for verifying over which available radio channels a signal is received, first measurement means for evaluating the signal received over each available radio channel and first verification means to check that said power level is greater than or less than a determined power threshold.

6. **Fixed unit** according to claim 3, **characterised in that** it includes some second exploration means for verifying over which available radio channels a signal is received, second measurement means for evaluating the signal received over each available radio channel and second verification means to check that said power level is greater than or less than a determined power threshold.

7. **Remote unit** according to claim 5, **characterised in that** it also includes some first pairing means for coupling one of the available radio channels suitable for it, with a suitable and available radio channel received from said fixed unit.

8. **Fixed unit** according to claim 6, **characterised in that** it also includes some second pairing means for coupling one of the available radio channels suitable for it, with a suitable and available radio channel received from said remote unit.
